Europäisches Patentamt

European Patent Office

Office européen des brevets

(11) Publication number: **0 072 357**
**B1**

# (12) EUROPEAN PATENT SPECIFICATION

(45) Date of publication of patent specification: **08.10.86**

(51) Int. Cl.⁴: **B 29 B 7/56**

(21) Application number: **82830214.1**

(22) Date of filing: **28.07.82**

(54) **Rollermixer for rubber with completely automatically operating cycle.**

(30) Priority: **03.08.81 IT 2334181**

(43) Date of publication of application:
**16.02.83 Bulletin 83/07**

(45) Publication of the grant of the patent:
**08.10.86 Bulletin 86/41**

(84) Designated Contracting States:
**CH DE FR GB LI**

(56) References cited:
**DE-A-1 679 845**
**GB-A- 399 850**
**GB-A- 854 662**
**GB-A-1 169 297**
**US-A-1 364 183**
**US-A-2 593 282**
**US-A-3 075 238**

(73) Proprietor: **COMERIO ERCOLE S.p.A.**
**Via Silvio Pellico, 3**
**Busto Arsizio (IT)**

(72) Inventor: **Comerio, Rinaldo**
**Via Generale Espinasse, 2**
**Busto Arsizio (IT)**

(74) Representative: **Caregaro, Silvio et al**
**c/o Società Italiana Brevetti S.p.A. Via Carducci**
**8**
**I-20123 Milano (IT)**

Courier Press, Leamington Spa, England.

## Description

The present invention relates to a roller-type mixer for rubber which has a completely automatically operating cycle.

There are known apparatuses for working plastic stocks such as rubber and the like, comprising two rotatable mill rollers and means for withdrawing one or more rubber strips from the rollers and returning them to the rollers at points spaced axially along the rollers from the points of withdrawal to uniformly distribute the various compounding materials.

An apparatus of the above type is disclosed in the U.S. Patent No. 2.593.282 wherein an additional driven roller and a support member are employed to return rubber strips from predetermined axial positions to different predetermined axial positions.

Another more complex apparatus is disclosed in U.S. Patent No. 3.075.238 wherein the strips are withdrawn from the rollers at a central position and returned to the side positions of the rollers along a cooling path.

A better mixing can be obtained by associating to the roller mixer a homogenising device for receiving at least one rubber strip from the roller mixer, but such roller mixers have serious inconveniences due to the fact that they require a number of manual operations which, besides weighing on the cost of the finished product, represent a great potential danger for the user. In fact, while the mixer is operating, the operator must provide, by a knife, to cut out a strip from the tape of rubber which generally sticks to the moving front roller, to remove the said strip of rubber, and to let it into the homogenising apparatus. All these operations, carried out in presence of moving members such as the mixing rollers, involve a danger for the worker, who is obliged to pay a special attention to his job.

A further drawback, deriving from the relatively short time within which the operating cycle of the mixer takes place, i.e. the time required for a complete mixing of a rubber batch, consists in the fact that the operator working at a mixer cannot pay his attention to other machines. The resulting drawbacks of having high costs of the ultimate product are obvious, both for the presence of labour and for the rather long times necessary to perform the requested operations.

It has been conceived now, and it is the object of the present invention, to provide a roll-mixer for rubber, which allows all the above drawbacks to be overcome, as it is provided with means and devices suitable to give a completely automatically operating cycle.

Accordingly, the invention provides a roller mixer for rubber comprising, mounted on a frame, a pair of counter-rotating mixing rollers on one of which a superficial layer of rubber is formed, a homogenising device being provided, associated with the mixer for receiving at least one strip of rubber from the mixing roller on which the superficial layer of rubber is formed, characterized in that with the mixing roller on which the rubber layer is formed there are associated first cutting means, positioned along its length, which can be operated in succession, each for obtaining from the superficial rubber layer a strip of pre-established width; scraper means being positioned between two contiguous cutting means and capable of carrying out at least one transverse cut of the strip obtained by said first cutting means and to take off such a strip from the mixing roller on which the rubber layer is formed, towards means for conveying the said strip to catching means capable of bringing the end of the strip of rubber until the inlet of the homogenising device, there being further provided second cutting means of the strip of rubber in order to obtain segments of pre-established length at the end of the operating cycle and control means for controlling the operation of said first cutting means, scraper means and second cutting means.

The features and advantages of the mixer according to the present invention will be clear from the following detailed description of a non limiting embodiment thereof, with reference to the attached drawings in which:

FIGURE 1 is a side view of a mixer according to the invention;

FIGURE 2 is a plan view of the mixer of Fig. 1; and

FIGURE 3 is a front view of the mixer.

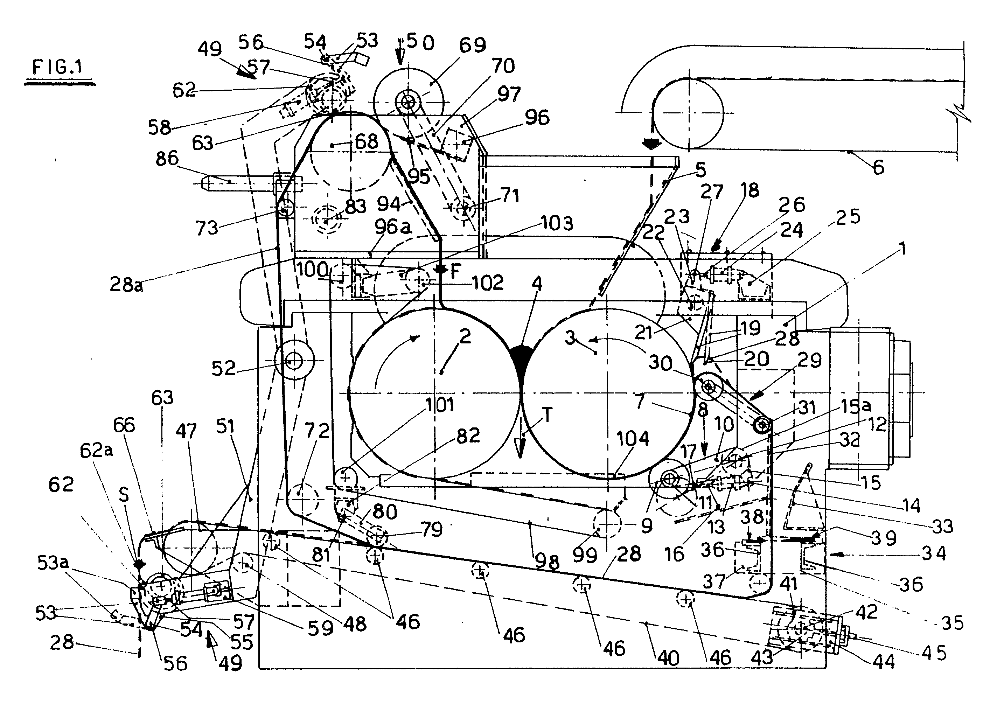

With reference to the drawings, the mixer according to the invention comprises, mounted on a frame 1, a pair of counter-rotating mixing rollers 2, 3 supported in any known way whichsoever by the frame 1 and provided with known and not shown driving systems for their rotation. The mixing rollers 2, 3 receive a batch of rubber compound, partially represented by the dark zone 4 of Fig. 1, through a charging hopper 5, which receives compound 4 from a conveyor belt 6, being placed above the hopper 5.

The compound may be fed such as from a Banbury-type mixer in which a first processing has taken place, or from another roller mixer.

The path of the compound 4 from the conveyor-belt 6 to the zone included between the rollers 2 and 3 is schematically shown in Fig. 1 by a thickened broken line.

When the compound reached the nip between the rollers 2 and 3, owing to the laminating action carried out by the rollers themselves, which have different rotation speeds, the rubber lays down on the roller which can be considered the front one 3 (usually the slower roller) in a surface layer shown by a thickened line 7 around the roller 3.

The rear roller 2 has essentially the function of counter-roll for the mixing of the rubber, but no surface layer of rubber sticks thereon. In any case this arrangement according to which a layer of rubber is formed on the front roller is known in the mixers of this type.

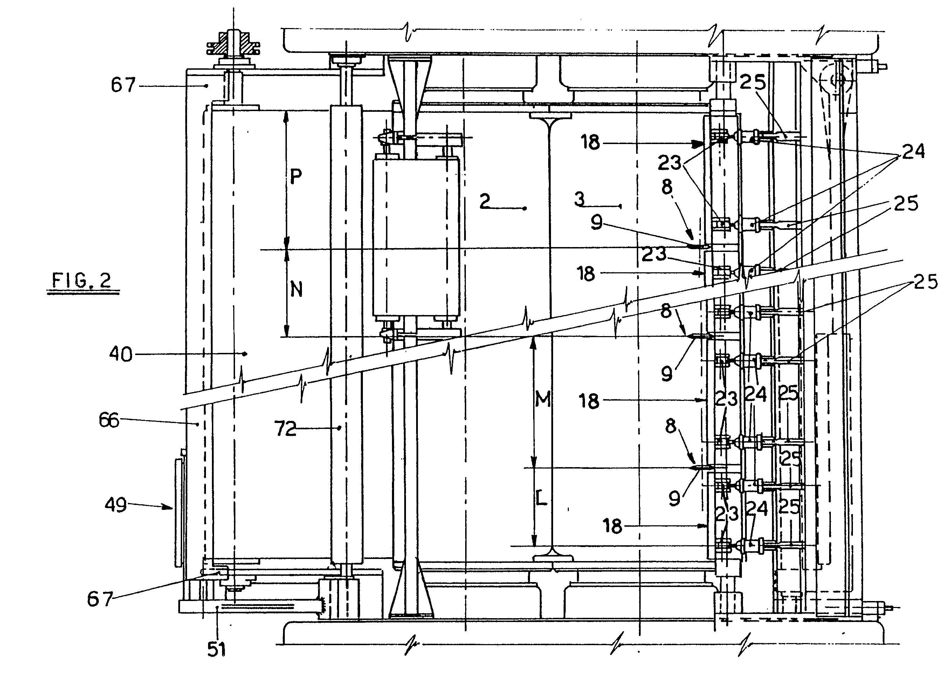

With particular reference to the Figs. 1 and 2 first cutting devices are associated with the front roller 3 and can be operated successively one after another, as it will be clearer in the following, which are provided to cut the tape of rubber sticking on the roller 3, in strips of pre-determined width. In the illustrated embodiment the said first cutting devices, generally designated by reference numeral 8 are three, positioned at a different distance relationship one from the other. In particular, as it is shown in Fig. 2, the distance between pairs of the said first cutting devices 8 is increasing considering the said distance from the bottom toward the zone of the same figure.

Each first cutting device 8 is comprised of a circular cutting blade 9 supported by a bearing arm 10, which oscillates on a pivot 12, being designed to assume two different positions shown in Fig. 1, namely an operating position, represented by a continuous line, in which the blade 9 is in touch with the roller 3, and a rest position, represented in phantom, where the blade 9 is spaced out from the roller 3. The blade 9 is mounted on a rotating pin 11 at the end of the swinging arm 10 and it is driven in rotation by the friction against the roller of the mixer.

The swinging of the arm 10 suitable to cause the blade 9 to assume the above-specified positions are obtained by a small drive piston 13 having its cylinder integral in 14 with a stationary dependent member 15, a portion 15a of which is fixedly mounted on the pivot 12 around which one end of the arm 10 rotates.

The stem 16 of the piston 13 is pivotely mounted on a projection 17 of the arm 10 at the same side of the cutting blade 9. It is obvious, although not shown, that the pivoting of the stem 16 and the projection 17 will be obtained by a slot, because of the rectilinear movement of the stem 16 and the circular one of the projection 17.

The first cutting devices 8, as an example, are positioned at the lower part of the roller 3, and in particular, considering the direction of rotation of the said roller, slightly downstream of the lower zone of the roller. Yet they could be placed in a likewise suitable different position.

Above the first cutting means 8 scraper devices are provided, at the upper part of the frame 1, which are visible in more detail in Fig. 1, each being capable of causing the detachment from the roller 3 of the strip of rubber cut by the first cutting means 8.

The scraper devices, which are generally indicated with 18 are in number of four, as three are the first cutting devices 8.

The scraper devices 18, with reference to Fig. 1, include an actual scraper 19 formed of a flat metallic foil having a slightly sharpened edge 20 which causes the strip of rubber to be detached.

The foil 19 is integral along its lateral edges with a supporting plate 21 which is hinged on a pivot 22 integral with the frame 1.

Thus the scraper foil 19 may swing between the operating position represented by a continuous line in Fig. 1 in which its edge 20 is in touch with the roller 3 and a so-called rest position represented by a broken line in the same figure.

One of the supporting plates 21, or both if a better balancing of the foil 19 is desired during its movement, has a projection 23 which allows the connection of the plate 21 with the driving means for the movements of the foil 19. The said driving means includes a small piston 24, having the cylinder integral with a support 25 fixed to the frame 1 of the machine, and its stem 26 pivotely mounted at the end 27 to the projection 23. It is obvious that the pivoting point 27 will be made as a slot, being rectilinear the movement of the stem 26 of the piston 24 and substantially circular the movement of the projection 23. In any case this arrangement is known and it is not represented in detail.

The previous description concerning one of the scraper devices 18, which we can suppose referred to the lower unit of Fig. 2, is also valid for all the other scraper units with which the mixer according to the invention is provided.

When the blade 19 is driven to the operating position, as schematically shown by a thickened broken line in Fig. 1, the strip of rubber is cut in a transverse direction and detaches itself from the roller 3 and, bending rearwardly, moves down due to the gravity.

In order to make the cutting easier it is possible to provide the quick automatic approach of the laminating rollers 2, 3, such as by the oleo-dynamic device disclosed in the German patent application no. 3048952, published 27.5.82, on the name of the present applicant. The same oleodynamic device allows the quick re-establishment of the normal operating position.

The scraper 19 remains in contact with the roller in order to provide the continuous detaching of the strip of rubber. The latter referred to as 28, upon detaching from the roller 3, lies down on a first fixed conveyor 29, positioned between two idle guide-rolls 30 and 31, of which the roll 30 is substantially contacting the mixing roller 3, while the roll 31 is placed above the first cutting means 8 in an offset position with respect thereto, such as the strip of rubber may move down freely under the gravity towards further conveyor means, which will be described in the following.

The fixed conveyor 29 is sloping downwards in the direction from the roller 30 to the roller 31, this in order to make easier the advancing of the strip of rubber 28.

Upon leaving the conveyor 29 and the guide roller 31, the strip of rubber moves down freely due to its weight, as shown by the thickened continuous line in Fig. 1 and its descent is controlled by stationary guides 32 and 33 which guide the strip of rubber 28 between cutting devices described hereinafter and the above-mentioned further conveyors.

In particular the first guide 32, represented by a broken line in Fig. 1, is formed as a vertical wall, beginning immediately under the second roll 31 of the conveyor 29 and ending at the height of the cutting means.

The second guide 33, also represented by a broken line, is provided by a substantially vertical wall, having a certain slope such as to form an acute angle with the forward direction of the strip 28.

This serves to ensure that the strip of rubber 28 enters exactly the space comprised between the guides 32 and 33, avoiding that it may incidentally move down, outside the zone included between the said two guides.

Immediately under the guides 32 and 33 there are provided second cutting devices for cutting the strip of rubber, generally indicated 34. They include, on a small stationary frame 35 schematically shown as comprised of two U-shaped crossbars 36 mutually connected at their ends by a plate 37, two rectilinear opposite cutting blades 38 and 39 one of which will be fixed (preferably the blade 38 close to the strip of rubber 28), while the other one will be moveable, in this case the blade 39, which will be connected with known means for the control of its movement.

The small frame 35 will be also provided with sliding and stopping means to allow the necessary movements of the cutting blade 39.

The second cutting means 34 has the function of removing one single strip of pre-established width at the end of the processing in order to send it to the cooling apparatus and to the storage or to further processing steps.

The further conveyors of the strip of rubber 28, which have been mentioned above, include a conveyor belt 40 represented by a broken line in Fig. 1, but also visible in Fig. 2 in the part in which it projects from the frame 1, the said conveyor belt being adapted to bring the strip of rubber to the inlet of a later described means suitable to allow the strip to be fed into a homogenising apparatus or to be discharged into a cooling station.

With particular reference to the Fig. 1 the conveyor belt 40 extends itself in the lower portion of the machine, under the rollers 2 and 3, for such a length as to ensure, at one end the collection of the strip of rubber 28 from the conveyor 29 and to allow, at the other end, projecting from the frame 1, the discharge of the strip itself or its catching to be brought to the homogenising device. At the end in which the collection of the strip of rubber 28 takes place, the conveyor belt 40 winds around an idle roll 41 turning on a shaft 42, which is provided at its ends with two supporting plates 43 (only one visible in Fig. 1) which are sliding inside a stationary guide 44 and by means of an adjusting screw 45, connected to the plates 43, the belt 40 is kept under tension.

The conveyor belt 40 runs along its upper face, on supporting rolls 46 freely turning on the frame 1 and winds, at the end opposite to the previously mentioned, around a roll 47 placed outside the frame 1. By 48 a freely turning roll on the frame 1 is indicated which is designed to keep in tension the conveyor belt 40, and co-operates with the periodical adjusting action of the tension screw 45.

The mixer according to the invention includes also means for catching the front end of the strip of rubber 28 in the forward direction, these means being generally indicated with 49, and for carrying the said strip of rubber to a homogenising device referred to in its whole as 50.

With reference to the drawings, the means for catching the front end of the strip of rubber 28 includes a substantially L-shaped swinging arm 51, which is pivotedly mounted at one end on a pivot 52 fixed to the frame 1 of the machine, in a substantially central zone thereof. The arm 51 is movable between two positions, the lower one of which is represented by a continuous line in Fig. 1, while the higher one, in which the strip 28 is carried on to the homogenising device 50, is represented by a broken line.

On the second side of the arm 51, which is shorter than the first one and is substantially horizontal in the lower position of the arm, there is provided the actual catching means to hold the end of the strip of rubber 28. The said means includes a bracket 53 which, as well as the other above-described devices, is represented by a continuous line in the operating position and by a broken line in the rest position.

The bracket 53, having an end 53a which is slightly sloping in respect of the bracket itself, is fastened at the opposite end on a pin 54, which is rotatable on a projection 55 of the arm 51. The end of a small rod 56 is also fastened to the pin 54 and connects the latter with the end of a piston rod 57 of a piston 58, having the cylinder fixed in 59 to the arm 51. Thus the movements of the piston rod 57 are converted into rotations of the bracket 53, as this is integral in its rotations with the small rod 56.

Obviously, also in this case, the connection of the end of the piston rod 57 with the end of the small rod 56, will be made by a slot, being rectilinear the movement of the piston rod 57 and substantially circular that of the small rod 56. Being this arrangement already known, this detail is not represented.

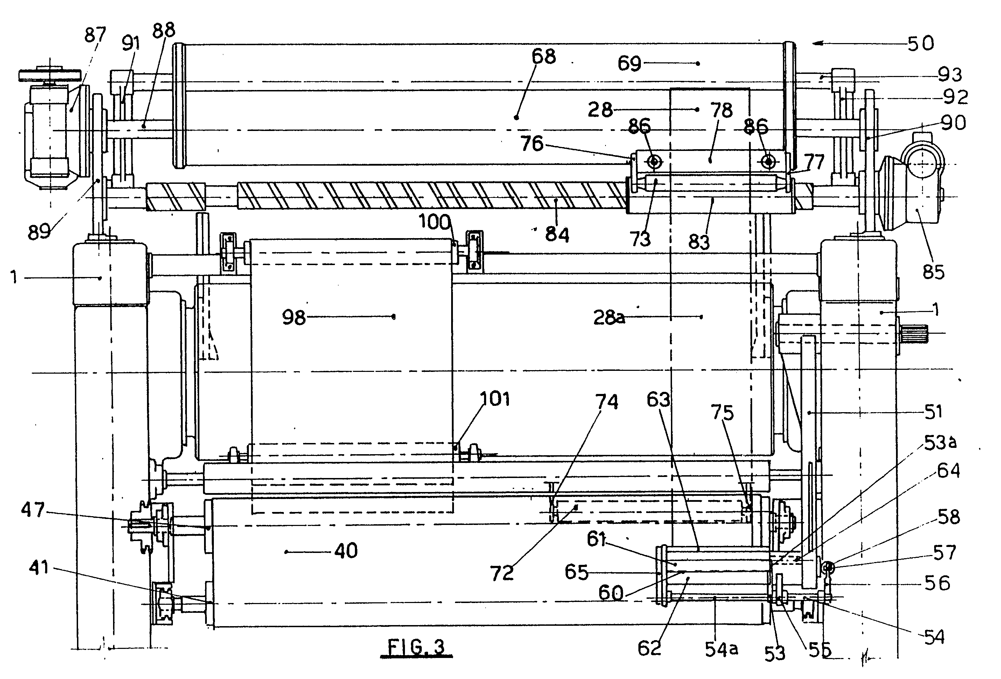

Now, with particular reference to the Fig. 3, the locking of the end of the strip of rubber 28 must be ensured all along its width, whereby a further bracket 60 is joined to the bracket 53, having substantially the same shape, the said brackets 53 and 60 being connected by a cross bar 61. The bracket 60 is fastened at one end, like the bracket 53, on an extension 54a of the pin 54. Therefore, when the two brackets 53 and 60 are brought toward the ends of the arm 51, the cross-bar 61 engages with a member fixed to the arm 51, later described, which permits to retain the end of the strip of rubber 28.

The fixed member now mentioned, visible in particular in Fig. 1, comprises a section iron 62, essentially cylinder-shaped, integral with the end of the arm 51, which is interrupted according to a longitudinal plane which is parallel with a diametral plane, thus defining an opening 62a which is slightly projecting with respect to the upper edge of the arm 51 side, when it is in the lower position (Fig. 1).

The strip of rubber locking cross-bar 61 will engage against the front side surface of the section iron 62 and therefore it will show correspondingly a circular profile in cross-section.

Inside the section iron 62, slightly projecting therefrom through the port 62a, a roll 63 is mounted freely rotatable about the arm 51, being supported by a shaft 64, which is fixed at one end to the arm 51, and, at the other end, to a flange 65 integral with the pin extension 54a and the section iron 62.

From the foregoing it is obvious that, when the front end of the strip of rubber 28 reaches the roll 47, it places itself in a substantially vertical position, as in particular it is shown by the arrow S in Fig. 1, moving down under its weight, being guided in this phase by a guide section 66 whose transverse section is visible in Fig. 1, while the plan view is shown in Fig. 2.

From this last figure it can be noticed that the guide section 66 extends itself in a transverse direction for the whole length of the mixer and it is substantially U-shaped, there being provided at its ends projections 67, by which the said section 66 is supported by the frame of the machine.

Referring now again to Fig. 1, the strip of rubber 28, after having left the roll 47, can be held by the above-described catching means, and brought toward the homogenising device 50, or, at the end of the processing, discharged due to the gravity directly on a further, not shown, conveyor, which is connected with a cooling final station, and positioned at the end of the conveyor belt 40 at a lower level.

In the first case, the small piston 58 is operated, which, through the lever 56, causes the approach of the cross-bar 61 to the section 62 blocking up the ends of the strip of rubber 28.

In this case the bracket 53, and correspondingly the bracket 60, move to the position shown in Fig. 1 by a continuous line for the bracket 53. Subsequently, by means of any known device, not shown, the clockwise rotation upwards of the arm 51 is caused to be obtained as far as the position, represented by a broken line in Fig. 1, is reached. Of course in this operating step of the mixer, the rotation speed 51 will be such that the movement of the end of the strip of rubber will correspond in its extent to the advancement speed of the strip itself on the conveyor belt 40 in order to avoid both stretching of the strip of rubber and accumulation of material.

Once the arm 51 has reached the higher position, the roll 63 is in engagement with a first roll 68 directly driven by the homogenising device 50.

A second roll 69 of the same homogenising device 50 is caused to adhere under its weight onto the roll 68 by a lever 70, pivotedly mounted at one end on a pin 71.

In order to allow the inserting of the end of the strip of rubber 28 between the two rolls 68 and 69 of the homogenising device 50, the said end, before its locking against the section iron 62 is caused to forward for a certain length, past the said section as schematically shown by a thickened broken line in Fig. 1.

This is possible as the width of the strip is less than the distance between the inner edges of the projections 67 of the guide section 66, as shown in particular in Fig. 2.

Once the end of the strip of rubber is caught and the arm 51 is rotated to the raised position, the small cylinder 58 is actuated through an appropriate control means so that the brackets 53 and 60, and consequently the section 61 move away from the section 62. The protruding portion of the end of the strip of rubber 28 has already reached the first driven roll 68 of the homogenising device 50 due to its weight and, upon releasing of the catching and locking means, it enters the nip between the said rolls, because of the dragging action of the roll 68, as shown by a thickened continuous line in Fig. 1. At this point the path of the strip of rubber includes the length on the conveyor 29, the vertical section between the conveyor 29 and the conveyor belt 40 and finally the vertical section 28a directed upward, between the guide rolls 72 and 73, of which the roll 72 is freely mounted to rotate on two small brackets 74 and 75 for supporting its ends, and the roll 73 is freely mounted for rotation on two small brackets 76 and 77 being integral with a cross-bar 78 of the homogenising device 50. In Fig. 1 by 79 is indicated a pressing roll freely rotatable on one of the ends of two supporting rods 80, which is designed to guide forward to the cooling device, downstream of the mixer, the strip of rubber 28 with predetermined width before it leaves the conveyor belt 40. The small supporting rods 80 of the roll 79 are hinged in 81, at the opposite end, on two fixed brackets 82 integral to the frame 1 of the machine.

The homogenising device 50, per se known, comprises a hollow cylinder 83 innerly threaded, which supports in whichever known way, here not represented, the cross-bar 78 and thereby also the roller 73, on which the strip of rubber 28 moves forward.

The cylinder 83 is slidable, in a direction transverse to the machine, on a control bar 84, being threaded in correspondence with the inner thread of the cylinder 83. The control bar 84 is caused to rotate by means of a driving motor 85 and its rotation causes a transverse movement of the cylinder 83, in one direction and in the opposite one according to the direction of rotation of the driving motor 85.

As a consequence the strip of rubber 28 is carried alternately in both the said directions, due to the presence of two projections 86, with which the cross-bar 78 is provided and projecting toward the front part of the mixer, thus forming a fork device that allows the strip 28 to follow constantly the movements of the unit comprised of the cylinder 83 and the cross-bar 78.

In this manner the strip of rubber 28 in its advancement between the rolls 68 and 69 of the homogenising device 50 moves constantly in a transverse direction, covering the whole length of the said rolls in both directions.

The control means for the rotation of the cylinder 68 of the homogenising device 50 comprises a driving motor 87, shown in Fig. 3, which is connected with the shaft 88 on which the cylinder 68 is fixedly mounted, the shaft 88 being supported for rotation by two standards 89 and 90 of the machine frame 1. On the standards 89 and 90 the control bar 84 is also rotatably mounted, driven by its own motor 85.

With particular reference to Fig. 1, at the outlet of the two cylinders 68 and 69 of the homogenising device, a pair of scraper members is provided, respectively designated 94 and 95, each operating on one of the said cylinders.

In particular the scraper member 94 is fixed, operates on the first cylinder 68 and is formed of a metallic plate sloping downwards in such a position as to carry the strip of rubber to the mixing roller 2 as schematically shown by the arrow F in Fig. 1. The strip in this case passes through an opening 96 in the base of the homogenising device 50 and through the upper part of the machine frame 1.

The second scraper member 95 is also formed of a metallic foil, the free end of which is in contact with the roll 69 of the homogenising device 50, the said foil being mounted on supporting plates 96a which are hinged on the frame 97 of the homogenising device 50, as this foil 95, not only carries out the actual scraping operation, but also may be used to guide the strip of rubber 28 towards the first scraper member 94.

The mixer according to the invention, as above described, allows to obtain a strip of rubber suitably prepared and having homogeneous characteristics, which finally is discharged downwards owing to gravity and collected at the bottom by a conveyor belt, not shown, which carries the same to a known cooling station, not shown. During this stage the cutting means can be operated, so that the strip of rubber 28, may be cut in segments of pre-established length, according to the specific requirements of the designed utilization.

Similarly to what has been described for the first strip of rubber coming out laterally in the position of Fig. 2, the same processing cycle takes place for the other strips of rubber, that is the two remaining ones in the illustrated embodiment.

However, before mentioning shortly of the operating cycle concerning the other two strips, a device is now described with which the mixer according to the invention may be provided, the said device being not strictly necessary for the operation of the machine, and being possibly considered, from this point of view, an optional variation.

The mentioned device is in fact provided only for collecting the possible scraps of compound falling below the two mixing rollers 2 and 3, which in the traditional mixers have to be collected manually and placed again between the said rollers.

With particular reference to Fig. 1, sometimes it happens that the compound 4, once passed through the mixing rollers 2 and 3 does not fully stick to the front roller 3, as above-mentioned for the formation of the superficial layer of rubber which afterwards will be cut in strips, but breaks partially into scraps which due to gravity, fall down as shown by the arrow T of Fig. 1. The mixer according to the invention includes, for this purpose, a conveyor belt 98 positioned under the mixing rollers 2, 3, prevalently in the zone corresponding to the nip between said rollers. The conveyor belt winds at one end around a roll 99 which can be considered, by way of example, the driving roll, and at the other end around a driven roll 100 positioned in the upper part of the frame 1, immediately below the homogenising device 50.

A roll 101 provided on a side of the mixing roller 2, functions as a transmission roll for the conveyor belt 98 from its horizontal to its vertical path.

In order to keep in tension the conveyor belt 98, a third roll 102 is provided, being positioned over the mixing roller 2 close to the roll 100, the said roll 102 being supported at its ends by supporting rods 103, which are fastened to the frame 1 of the machine and possibly provided with means for adjusting the position of the roll 102 in order to fit periodically the tension of the belt 98.

In the zone where possibly the scraps of rubber compound may fall, that is in the zone substantially defined by the vertical planes passing through the centers of the rollers 2 and 3, the belt 98 is provided at its edges, with walls 101 to prevent the said scraps from falling on the sides of the conveyor belt 98.

The scraps falling on the conveyor belt 98, are carried by the latter on the mixing roller 2, as the belt 98 winds partially around the profile of the mixing roll 2.

The conveyor belt 98 gets in touch with the mixing roller 2 in a zone corresponding with the vertical drawn from the center of the roller and leaves it on the upper part, slightly before the vertical drawn from the center towards the upper edge. In fact at this point the scrap of rubber does no longer require to be retained by the belt 98 on the roller 2, and is automatically carried on to the zone comprised between the two rollers.

The operation of the mixer according to the invention is continuous, completely automatic and resumable as follows.

Once the compound 4 has arrived between the mixing rollers 2, 3, and after the formation of the superficial layer of rubber 7 on the roller 3, one of the cutting devices is operated in order to obtain the first strip; in particular the cutting means which is shown in the lower part of Fig. 2 and which provides to form the first strip the width of which is indicated by L. When the length of the cut zone reaches a sufficient amount to let the strip of rubber 28 detach itself from the mixing roller 3, the scraper devices are actuated and the first strip may thus descend onto the conveyor 29 until reaching the conveyor belt 40 to be finally kept at its end by the catching member 49 in the above described manner.

The arm 51 is rotated in a clockwise direction until the position shown by a broken line in Fig. 1, in which position the catching means of the strip of rubber 28 released, and the strip can be fed to the homogenising device 50, then coming back again between the rollers 2 and 3.

The process cycle of the first strip can go on as the compound 4 continues to supply with material for the formation thereof.

When the cutting of the second strip has to be carried out, the cutting means next to the previous one is operated, that is the cutting device 9 which has the second position from the bottom in Fig. 2, in order to cut a strip of width M. Therefore the scraper means 18 will be actuated to remove the second strip, which will follow the first one in the above-indicated path. For this purpose it is sufficient, in order to render mutually integral the two strips, to stop working the first cutting means, when the first strip is going to be finished, so that at a certain moment from the mixing roller 3 the last segment of the first strip is detached, which is integral to the front end of the second strip and will drag the latter towards the homogenising device 50.

The formation of the third and fourth strips of width N and P will occur through the same operation steps as now indicated for the first and the second strips. Substantially continuous ribbon is formed which feeds the homogenising device and the total amount of finished rubber enters again between the mixing rollers 2, 3.

The support of the strips following the first one is obtained, as both the conveyor 29 and the conveyor belt 40, are coextensive with the width of the mixing rollers 2, 3, as in particular is evident in Figs. 2 and 3.

The strips following the first one will reach the path of the first one, as they connected therewith and will be driven towards the zone corresponding to the path 28a of the strip, as shown in particular in Figs. 1 and 3.

When the operation cycle is over, after having lowered again the arm 51 in the position represented by a continuous line in Fig. 1, the strip of rubber is carried onto the roll 47 and by the guide 66 is discharged downward, as shown by the arrow S of Fig. 1, to a cooling device, not shown.

Periodically the cutting devices 34 are operated to cut the strip obtained according to pre-established lengths.

The mixer according to the invention will be obviously provided with all those control, synchronization and actuation devices, which are not specifically represented as being per se known, suitable for causing the mixer to operate in a completely automatic processing cycle.

To this end a suitable control station will be provided in which all the various controls are centralized, which can be preset by the operator once and forever.

According to a particularly advantageous embodiment, not represented, it is possible to arrange, over the conveyor belt 40, an air cooling equipment to cool the compound, thus improving its characteristics.

Finally it is clear that variations and/or modifications can be carried out with reference to the rubber mixer according to the present invention within the scope of the claims.

**Claims**

1. Roller mixer for rubber comprising, mounted on a frame (1), a pair of counter-rotating mixing rollers (2, 3) on one of which (3) a superficial layer of rubber is formed, a homogenising device (50) being provided, associated with the mixer for receiving at least one strip of rubber from the mixing roller on which the superficial layer of rubber is formed, characterized in that with the mixing roller (3) on which the rubber layer is formed there are associated first cutting means (8), positioned along its length, which can be operated in succession, each for obtaining from the superficial rubber layer a strip of pre-established width; scraper means (18) being positioned between two adjacent cutting means (8) and capable of carrying out at least one transverse cut of the strip obtained by said first cutting means (8) and to take off such a strip from the mixing roller (3) on which the rubber layer is formed, towards means (29, 40) for conveying the said strip to catching means (49) capable of bringing the end of the strip of rubber until the inlet of the homogenising device (50), there being further provided second cutting means (34) of the strip of rubber in order to obtain segments of pre-established length at the end of the operating cycle and control means (13; 21, 24; 36) for controlling the operation of said first cutting means (8), scraper means (18) and second cutting means (34).

2. Mixer according to claim 1, characterized in that each first cutting means (8) includes an arm (10) having at the end thereof a cutting blade (9), said arm (10) being swingable on the machine frame (1) from an operating position in which the blade (9) is in contact with said mixing roller (3) on which the rubber layer is formed to cut the strip of rubber (28), and a rest position in which the blade (9) is spaced from this roller (3).

3. Mixer according to claim 2, characterized in that the said means for controlling the operation of said first cutting means comprises a small piston (13) the stem of which is connected with the arm (10).

4. Mixer according to claim 2, characterized in that the cutting blade (9) is a substantially circular blade, mounted for rotating on the end of the arm (10).

5. Mixer according to claim 1, characterized in that the scraper means (18) comprises a blade (19) the operating edge of which is parallel to the longitudinal axis of the mixing roller (3) on which the rubber layer is formed and opposite thereto, the said blade (19) being swingable on the machine frame (1) between two positions, respectively an operating position in which the working edge of the blade is in contact with the mixing roller (3) on which the rubber layer is formed, and a rest position, in which the said edge is spaced from this mixing roller (3).

6. Mixer according to claim 5, characterized in that said means for controlling the movements of the scraper means (18) includes at least a piston (24) the stem of which operates a swinging supporting element (21) with which the blade (19) is integral.

7. Mixer according to claim 1, characterized in that the conveying means for carrying the strip of rubber (28) includes a conveyor (29) in a position close to the mixing roller (3) and designed to feed a conveyor belt (40), placed below the mixer, the said conveyor belt (40) feeding the catching means (49) for locking the end of the strip of rubber (28).

8. Mixer according to claims 1 and 7, characterized in that the conveyor (29) is sloping downwards, the strip of rubber (28) being fed to the conveyor belt (40) owing to its own weight through guide means (32, 33).

9. Mixer according to claims 1 and 7, characterized in that the conveyor belt (40) terminates in a zone overhanging the means (49) for catching the end of the strip of rubber (28), the said catching means (49) being placed at the end of an arm (51) capable of rotating on the frame (1) of the mixer, and designed to carry the end of the strip of rubber (28) until the inlet of the homogenising device (50).

10. Mixer according to claims 1 and 9, characterized in that the catching means (49) for holding the end of the strip of rubber (28) includes a stationary section iron (62) placed in a transverse direction to the advancement path of the strip of rubber (28), against which a fastening cross-bar (61) rests to lock the strip of rubber by the action of its control means.

11. Mixer according to claims 1 and 10, characterized in that the said control means of the cross-bar (61) which fastens the strip of rubber (28) includes at least one position (51), the stem of which operates a swinging kinematic transmission (55, 56) which is integrally made with the cross-bar (61).

12. Mixer according to claims 1 and 11, characterized in that, with the fixed section iron (62) on which the end of the strip of rubber (28) is fastened a rotatable member roll (63) is associated, being adapted to rest on one of the two rolls (68) of the homogenising device (50) when the strip of rubber (28) is discharged into the homogenising device.

13. Mixer according to claim 1, characterized in that it includes means for collecting scraps or the like of the compound of rubber, which do not stick to the mixing roller (3) falling under the nip zone of the mixing rollers.

14. Mixer according to claim 13, characterized in that the said collecting means comprises a conveyor belt (98) to carry again the said scraps on the other mixing roller (2).

15. Mixer according to claim 14, characterized in that the said conveyor belt (98) is wound around the mixing roller (2) between its lower and upper edge.

16. Mixer according to claim 1, characterized in that above the conveyor belt (40) an air-cooling equipment is installed to cool the strip of rubber (28).

**Revendications**

1. Mélangeur à cylindres pour caoutchouc comprenant, monté sur un bâti (1), une paire de cylindres mélangeurs (2, 3) tournant en sens contraire et sur l'un desquels (3) est formée une couche superficielle de caoutchouc, un dispositif d'homogénéisation (50) étant prévu, associé au mélangeur, pour recevoir au moins une bande de caoutchouc provenant du cylindre mélangeur sur lequel est formé la couche superficielle de caoutchouc, caractérisé en ce que, au cylindre mélangeur (3) sur lequel est formée la couche de caoutchouc, sont associées de premiers moyens de coupe (8) placés sur sa longueur, qui peuvent être actionnés en succession, chacun pour obtenir, à partir de la couche superficielle de caoutchouc une bande de largeur préétablie; des moyens de raclage (18) étant placés entre deux moyens de coupe contigus (8), susceptibles d'effectuer au moins une coupe transversale de la bande obtenue par lesdits premiers moyens de coupe (8) et de retirer une telle bande du cylindre mélangeur (3) sur lequel est formé la couche de caoutchouc, en direction de moyens (29, 40) prévus pour transporter ladite bande vers des moyens de prise (49) susceptibles d'amener l'extrémité de la bande de caoutchouc jusqu'à l'entrée du dispositif d'homogénéisation (50), en ce qu'on prévoit en outre de seconds moyens de coupe (34) de la bande de caoutchouc afin d'obtenir des segments de longueur préétablie à la fin du cycle de fonctionnement et des moyens de contrôle (13; 21, 24; 36) pour contrôler le fonctionnement des premiers moyens de coupe (8), des moyens de raclage (18) et des seconds moyens de coupe (34).

2. Mélangeur selon la revendication 1, caractérisé en ce que chaun des premiers moyens de coupe (8) comprend un bras (10) présentant, à son extrémité, une lame de coupe (9), ledit bras (10) pouvant pivoter sur le bâti (1) de la machine à partir d'une position de fonctionnement dans laquelle la lame (9) est en contact avec ledit cylindre mélangeur (3) sur lequel est formée la couche de caoutchouc afin de couper la bande de caoutchouc (28), et une position de repos dans laquelle la lame (9) est écartée de ce cylindre (3).

3. Mélangeur selon la revendication 2, caractérisé en ce que lesdits moyens permettant de contrôler le fonctionnement desdits premiers moyens de coupe comprennent un petit piston (13) dont la tige est reliée au bras (10).

4. Mélangeur selon la revendication 2, caractérisé en ce que la lame de coupe (9) est une lame sensiblement circulaire montée pour tourner sur l'extrémité du bras (10).

5. Mélangeur selon la revendication 1, caractérisé en ce que les moyens de raclage (18) comprennent une lame (19) dont le bord de travail est parallèle à l'axe longitudinal du cylindre mélangeur (3) sur lequel est formé la couche de caoutchouc et opposé à ce dernier, ladite lame (19) pouvant pivoter sur le bâti (1) de la machine entre deux positions, à savoir respectivement une position de fonctionnement dans laquelle le bord de travail de la lame est en contact avec le cylindre mélangeur (3) sur lequel est formée la couche de caoutchouc et une position de repos dans laquelle ledit bord est écarté de ce cylindre mélangeur (3).  ·

6. Mélangeur selon la revendication 5, caractérisé en ce que lesdits moyens permettant de contrôler les mouvements des moyens de raclage (18), comprennent au moins un piston (24) dont la tige actionne un élément oscillant de support (21) avec lequel la lame (19) fait partie intégrante.

7. Mélangeur selon la revendication 1, caractérisé en ce que les moyens de transport prévus pour transporter la bande de caoutchouc (28) comprennent un transporteur (29) dans une position proche du cylindre mélangeur (3) et conçu pour alimenter une courroie transporteuse (40), placée en dessous du mélangeur, ladite courroie transporteuse (40) alimentant les moyens de prise (49) pour verrouiller l'extrémité de la bande de caoutchouc (28).

8. Mélangeur selon les revendications 1 et 7, caractérisé en ce que le transporteur (29) est incliné vers le bas, la bande de caoutchouc (28) étant alimentée vers la courroie transporteuse (40) du fait de son propre poids à travers des moyens de guidage (32, 33).

9. Mélangeur selon les revendications 1 et 7, caractérisé en ce que la courroie transporteuse (40) se termine dans une zone surplombant les moyens (59) prévus pour prendre l'extrémité de la bande de caoutchouc (28), lesdits moyens de prise (49) étant placés à l'extrémité d'un bras (51) susceptibles de tourner sur le bâti (1) du mélangeur, et conçus pour transporter l'extrémité de la bande de caoutchouc (28) jusqu'à l'entrée du dispositif d'homogénéisation (50).

10. Mélangeur selon les revendications 1 et 9, caractérisé en ce que les moyens de prise (49) permettant de maintenir l'extrémité de la bande de caoutchouc (28) comprennent un profilé fixe (62) placé dans une direction transversale ou trajet d'avance de la bande de caoutchouc (28), contre lequel prend appui une traverse de fixation (61) pour verrouiller la bande de caoutchouc par l'action de son moyen de contrôle.

11. Mélangeur selon les revendications 1 et 10, caractérisé en ce que lesdits moyens de contrôle de la traverse (61) qui fixe la bande de caoutchouc (28) comprennent au moins un piston (51) dont la tige actionne une transmission cinématique oscillante (55, 56) qui fait partie intégrante de la traverse (61).

12. Mélangeur selon les revendications 1 et 11, caractérisé en ce que, au profilé fixe (62) sur lequel est fixée l'extrémité de la bande de caoutchouc (28), est associé un galet tournant (63), prévu pour reposer sur l'un des deux cylindres (68) du dispositif d'homogénéisation (50) lorsque la bande de caoutchouc (28) est amenée dans le dispositif d'homogénéisation.

13. Mélangeur selon la revendication 1, caractérisé en ce qu'il comprend des moyens pour recueillir des résidus de raclage ou analogues du composé de caoutchouc, qui ne collent pas au cylindre mélangeur (3) tombant sous la zone de pincement des cylindres mélangeurs.

14. Mélangeur selon la revendication 13, caractérisé en ce que lesdits moyens collecteurs comprennent une courroie transporteuse (98) pour transporter à nouveau lesdits résidus de raclage sur l'autre cylindre mélangeur (2).

15. Mélangeur selon la revendication 14, caractérisé en ce que ladite courroie transporteuse (98) est enroulée autour du cylindre mélangeur (2) entre son bord inférieur et son bord supérieur.

16. Mélangeur selon la revendication 1, caractérisé en ce qu'au dessus de la courroie transporteuse (40) est monté un équipement de refroidissement à air afin de refroidir la bande de caoutchouc (28).

**Patentansprüche**

1. Walzenmischer für Gummi, mit einem Paar von sich gegenläufig drehenden Mischrollen (2, 3), welche in einem Rahmen (1) gelagert sind, wobei eine der Rollen (3) mit einer Oberflächenschicht aus Gummi versehen ist; mit einer Homogenisierungsvorrichtung (50), welche dem Mischer zugeordnet ist, um wenigstens einen Streifen von Gummi von der Mischrolle zu erhalten, welche die Oberflächenschicht aus Gummi aufweist, dadurch gekennzeichnet,

daß zu der Mischrolle (3), auf der die Gummischicht aufgebracht ist, eine erste Schneidvorrichtung (8) zugehörig ist, welche in Längsrichtung angeordnet ist und welche betätigbar ist, um von der Oberflächen-Gummischicht einen Streifen festgelegter Breite zu erhalten; daß eine Abstreifvorrichtung (18) zwischen zwei benachbarten Schneidvorrichtungen (8) angeordnet ist, und wenigstens einen quergerichteten Schnitt an dem Streifen ausführen kann, der von der ersten Schneidvorrichtung (8) erhalten wurde und den Streifen von der Mischrolle (3), auf der die Gummischicht ausgebildet ist abnimmt; daß Fördermittel (29, 40) vorgesehen sind, welche den Streifen einer Fangvorrichtung (49) zuführen, welche das Ende des Gummistreifens zum Einlaß der Homogenisierungsvorrichtung (50) führt; und daß eine zweite Schneidvorrichtung (34) für den Gummistreifen vorgesehen ist, um Segmente festgelegter Länge am Ende des Arbeitszyklus zu erhalten, wobei eine Steuereinrichtung (13; 21, 24; 36) vorgesehen ist, um die Arbeitsweise der ersten Schneidvorrichtung (8), der Abstreifvorrichtung (18) und der zweiten Schneidvorrichtung (34) zu steuern.

2. Mischer nach Anspruch 1, dadurch gekennzeichnet, daß die erste Schneidvorrichtung (8) einen Arm (10) aufweist, der an seinem Ende eine Schneidklinge (9) trägt, wobei der Arm (10) an dem Rahmen (1) schwenkbeweglich angeordnet ist, und zwischen einer Arbeitsstellung, in der die Klinge (9) in Anlage mit der Mischrolle (3) ist, auf der die Gummischicht ausgebildet ist um einen Gummistreifen (28) zu schneiden und einer Ruhestellung beweglich ist, in der die Klinge (9) von dieser Rolle (3) einen Abstand hat.

3. Mischer nach Anspruch 2, dadurch gekennzeichnet, daß die Einrichtungen zum Steuern der Arbeitsweise der ersten Schneidvorrichtung einen kleinen Kolben (13) aufweisen, dessen Zylinder mit dem Arm (10) verbunden ist.

4. Mischer nach Anspruch 2, dadurch gekennzeichnet, daß die Schneidklinge (9) eine im wesentlichen kreisförmige Klinge ist, und an dem Ende des Armes (10) drehbeweglich angeordnet ist.

5. Mischer nach Anspruch 1, dadurch gekennzeichnet, daß die Abstreifvorrichtung (18) eine Klinge (19) aufweist, deren Arbeitskante parallel zur Längsachse der Mischrolle (3) verläuft, auf der die Gummischicht ausgebildet ist und dieser gegenüber liegt, wobei die Klinge (19) an dem Maschinenrahmen (1) zwischen zwei Stellungen schwenkbeweglich ist, nämlich einer Arbeitsstellung, un der die Arbeitskante der Klinge in Anlage mit der Mischrolle (3) ist, auf der die Gummischicht ausgebildet ist, und einer Ruhelage, in der diese Kante von dieser Mischrolle (3) einen Abstand hat.

6. Mischer nach Anspruch 5, dadurch gekennzeichnet, daß die Einrichtungen zur Steuerung der Bewegungen der Abstreifvorrichtung (18) wenigstens einen Kolben (24) aufweisen, dessen Zylinder ein schwenkbewegliches Tragelement (21) betätigt, an welchem die Klinge (19) einstückig ausgebildet ist.

7. Mischer nach Anspruch 1, dadurch gekennzeichnet, daß die Fördermittel zum Bewegen des Gummistreifens (28) ein Förderband (29) nahe der Mischrolle (3) aufweist, wobei das Förderband ein weiteres Förderband (40) unterhalb des Mischers beschickt, wobei dieses Förderband (40) die Fangvorrichtung (49) zum Greifen des Endes des Gummistreifens (28) beschickt.

8. Mischer nach Anspruch 1 und 7, dadurch gekennzeichnet, daß das Förderband (29) nach unten geneigt ist, wobei der Gummistreifen (28) dem Förderband (40) über Führungsmittel (32, 33) durch sein eigenes Gewicht zugeführt wird.

9. Mischer nach Anspruch 1 und 7, dadurch gekennzeichnet, daß das Förderband (40) in einem Bereich endet, welcher die Fangvorrichtung (49) für das Ende des Gummistreifens (28) überlappt, wobei die Fangvorrichtung (49) am Ende eines Armes (51) angeordnet ist, der an dem Rahmen (1) des Mischers schwenkbeweglich ist und so ausgelegt ist, daß er das Ende des Gummistreifens (28) bis zum Einlaß der Homogenisierrungsvorrichtung (50) führt.

10. Mischer nach Anspruch 1 und 9, dadurch gekennzeichnet, daß die Fangvorrichtung (49) zum Halten des Endes des Gummistreifens (28) ein ortsfestes Teil (62) aufweist, welches entgegen der Bewegungsrichtung des Gummistreifens (28) angeordnet ist, und gegen welches ein Haltsquerbalken (61) anlegbar ist, um durch Betätigung seiner Steuereinrichtung den Gummistreifen zu halten.

11. Mischer nach Anspruch 1 und 10, dadurch gekennzeichnet, daß die Steuereinrichtung des Querbalkens (61), der den Gummistreifen (28) hält, wenigstens einen Kolben (51) aufweist, dessen Zylinder eine schwingende kinematische Übertragung (55, 56) betätigt, welche einstückig an dem Querbalken (61) ausgebildet ist.

12. Mischer nach Anspruch 1 und 11, dadurch gekennzeichnet, daß das ortsfeste Teil (62), an welchem das Ende des Gummistreifens (28) befestigt wird, eine drehbare Rolle (63) aufweist, welche auf einer der beiden Rollen (68) der Homogenisierungsvorrichtung (50) aufliegt, wenn der Gummistreifen (28) in die Homogenisierungsvorrichtung eingeführt wird.

13. Mischer nach Anspruch 1, dadurch gekennzeichnet, daß Einrichtungen vorgesehen sind, um Schnitzel oder dgl. der Gummimischung, welche nicht an der Mischrolle (3) haften geblieben sind und unter die Berührungszone der Mischrollen gefallen sind aufzusammeln.

14. Mischer nach Anspruch 13, dadurch gekennzeichnet, daß die Sammeleinrichtung ein Förderband (98) aufweist, welches die Abfallschnitzel auf die andere Mischrolle (2) führt.

15. Mischer nach Anspruch 14, dadurch gekennzeichnet, daß das Förderband (98) im Bereich zwischen der Ober- und Unterkante der Mischrolle (2) um diese gewickelt ist.

16. Mischer nach Anspruch 1, dadurch gekennzeichnet, daß oberhalb des Förderbandes (40) eine Luftkühlung angeordnet ist, um den Gummistreifen (28) zu kühlen.

FIG.1

FIG. 2

0 072 357

FIG.3